# EUROPEAN PATENT APPLICATION

(11) **EP 4 124 485 A1**
(43) Date of publication of application: **01.02.2023**
(21) Application number: 21188651.0
(22) Date of filing: 30.07.2021
(51) Int. Cl.: B60J 3/04, G02F 1/1345, G02F 1/155

(54) **DIMMABLE TRANSPARENT ROOF ASSEMBLY**

(71) Applicant: Inalfa Roof Systems Group B.V., 5807 GW Oostrum (NL)
(72) Inventor: De Bie, Sander, 6361 XB Nuth (NL)
(74) Representative: De Vries & Metman

(57) **Abstract**

A dimmable transparent roof assembly comprises a central electrically dimmable layer, a common electrode layer on one surface of the dimmable layer which is connected to a common electrode line, a signal electrode layer on the opposite surface of the dimmable layer and two support layers. The signal electrode layer, as seen in a longitudinal direction of the roof assembly, is divided into signal electrode layer sections each extending in a transverse direction between opposite section ends. The signal electrode layer sections are grouped into two different groups and all signal electrode layer sections of one group at corresponding ones of the section ends are connected to respective signal electrode lines. All signal electrode layer sections of the other group at corresponding opposite ones of the section ends are connected to respective signal electrode lines.

## Description

The invention relates to a dimmable transparent roof assembly intended for use in the roof of a vehicle, comprising a central electrically dimmable layer, a common electrode layer on one surface of the dimmable layer which is connected to a common electrode line, a signal electrode layer on the opposite surface of the dimmable layer and two support layers on the surfaces of the common electrode layer and of the signal electrode layer, respectively, facing away from the dimmable layer, wherein the signal electrode layer, as seen in a longitudinal direction of the roof assembly, is divided into signal electrode layer sections each extending in a transverse direction between opposite section ends.

When in such a dimmable transparent roof assembly the number of signal electrode layer sections increases, the number of signal electrode lines increases correspondingly. This results in an increase of the overall width of the signal electrode lines, and beyond a certain number of sections, and thus signal electrode lines, such a width will be too much to accommodate in the roof assembly (such as, for example, under black out regions at side edges of the roof assembly).

In accordance with the present invention the signal electrode layer sections are grouped into two different groups, wherein all signal electrode layer sections of one group at corresponding ones of the section ends are connected to respective signal electrode lines, whereas all signal electrode layer sections of the other group at corresponding opposite ones of the section ends are connected to respective signal electrode lines and wherein the signal electrode lines extend longitudinally along side edges of the roof assembly which correspond with the respective section ends.

In such a configuration, the signal electrode lines no longer all extend at the same side edge, but are divided over the two side edges, thus limiting the overall width of the signal electrode lines extending at the same side edge, which allows to increase the daylight opening size of the roof assembly. Or, put in another manner, this allows an increase of the number of signal electrode layer sections without arriving at an unacceptable overall width of the signal electrode lines.

In an embodiment of the dimmable transparent roof assembly the difference between the number of signal electrode layer sections in the two different groups is at most 1. In such an embodiment the number of signal electrode layer sections in the two different groups will be identical when there are an even number of sections, thus evenly dividing the signal electrode lines over both side edges of the roof assembly.

The two different groups may be defined in many different manners. As non-limiting examples the following embodiments are mentioned: the signal electrode layer sections belonging to the same group are arranged adjacent each other, wherein the two different groups are positioned adjacent to each other as viewed in the longitudinal direction; the signal electrode layer sections belonging to one group are divided into two different subgroups each comprising signal electrode layer sections arranged adjacent each other, whereas the signal electrode layer sections belonging to the other group are arranged adjacent each other into a single group which, as viewed in the longitudinal direction, is positioned between the two subgroups; the signal electrode layer sections are arranged such that, as viewed in the longitudinal direction, signal electrode layer sections belonging to one group and signal electrode layer sections belonging to the other group alternate.

In one embodiment of the dimmable transparent roof assembly according to the present invention, the central electrically dimmable layer, the common electrode layer and the support layer on the common electrode layer are inwardly recessed at the section ends where signal electrode lines are connected to the signal electrode layer sections.

As a result, the signal electrode layer is locally exposed and is accessible for a connection to a respective signal electrode line, for example by applying solder or a conductive paste between the signal electrode layer and the signal electrode line. Further, such a recess results in sufficient space for accommodating the signal electrode lines (and possibly a common electrode line) extending longitudinally along the respective side edge of the roof assembly.

Preferably, the common electrode line is connected to the common electrode layer at an edge location of the roof assembly where no signal electrode line connects to a section end. This allows to minimize the thickness of the roof assembly.

The common electrode layer, which is common for at least a number of signal electrode layer sections, may be carried out in different ways. For example, it is conceivable that there is only one common electrode layer for all signal electrode layer sections. Thus, the roof assembly then has only one common electrode layer, which also needs only one common electrode line. The connection of such a single common electrode line to the single common electrode layer can occur at any of a number of different edge locations, but preferably, then, the common electrode line is connected to the common electrode layer at a forward or rearward edge of the roof assembly.

In an alternative embodiment there is a separate common electrode layer for each group with its respective common electrode line. In such an embodiment it is possible that a common electrode line of a group is connected to a corresponding common electrode layer at a side edge of the roof assembly opposite the section ends to which the signal electrode lines of said group are connected, wherein said common electrode line extends longitudinally along said side edge. This allows a very convenient and optimized positioning of the common electrode lines with respect to the signal electrode lines.

In one embodiment the central electrically dimmable layer, the signal electrode layer and the support layer on the signal electrode layer are inwardly recessed at the edge location where a common electrode line is connected to the corresponding common electrode layer. This makes the common electrode layer accessible for connection to the common electrode line and provides a space for accommodating the common electrode line (similar to what has been explained above with respect to inwardly recessing the central electrically dimmable layer, the common electrode layer and the support layer on the common electrode layer).

In one embodiment the common electrode line(s) and/or the signal electrode lines are defined by flexible printed circuits. However, other structures, such as for example copper strips (or bus bars), are conceivable too.

Hereinafter the invention will be elucidated while referring to the drawings, in which:
Figures 1 and 2 are a schematic top plan view and a schematic partial transverse cross-section, respectively, for illustrating the principles of a roof assembly, wherein figure 2 is a cross-section according to II-II in figure 1;
Figure 3 is a top plan view of a state of the art roof assembly;
Figures 4-6 are top plan views of embodiments of the roof assembly according to the invention, and
Figures 7 and 8 show partial transverse crosssections of embodiments of the roof assembly.

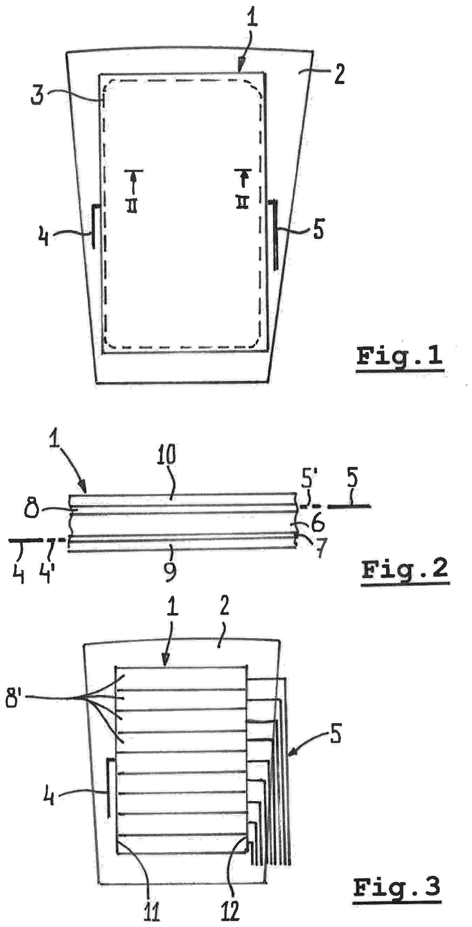

Figures 1 and 2 are used to illustrate the basic features of a dimmable transparent roof assembly 1 of the type intended for use in the roof 2 of a vehicle and subject of the present invention. The roof assembly 1 may be used to cooperate with a roof opening 3 in the roof 2, and for its activation (switching between a dimmed and non-dimmed state) is electrically connected to a common electrode line 4 and a signal electrode line 5 which may (and generally will) extend longitudinally along the roof assembly.

As illustrated in figure 2, such a dimmable transparent roof assembly 1 basically comprises a central electrically dimmable layer 6, a common electrode layer 7 to which the common electrode line 4 is connected (here this connection is only indicated schematically by a dotted section 4' of the common electrode line 4) on one (here lower) surface of the dimmable layer 6, a signal electrode layer 8 to which the signal electrode line 5 is connected (here this connection is only indicated schematically by a dotted section 5' of the signal electrode line 5) on the opposite (here upper) surface of the dimmable layer 6 and two support layers 9,10 on the surfaces of the common electrode layer 7 and of the signal electrode layer 8, respectively.

It is noted that figure 2 is not to scale and that in practice some or all layers may be very thin. Further it is noted, that in the embodiment according to figure 1 there is only a single electrode layer 8 extending over the entire extent of the roof assembly 1 which, thus, requires only a single signal electrode line 5.

Referring to figure 3 a state of the art embodiment of such a roof assembly 1 is illustrated (the roof opening 3 is not shown) in which the signal electrode layer, as seen in a longitudinal direction of the roof assembly, is divided into a number of separate signal electrode layer sections 8' each extending in a transverse direction between opposite section ends 11 and 12 (only indicated for one section 8'). For an individual activation of these sections 8' an equal number of respective signal electrode lines 5 is required, which leads to a bundle of signal electrode lines 5 with a considerable width, of which the positioning in the roof assembly 1 may cause problems.

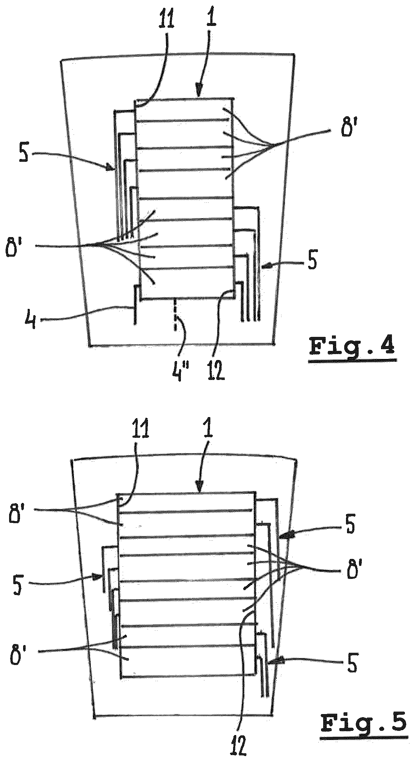

Figure 4 shows an embodiment of a roof assembly in which the features of the invention are embodied. The signal electrode layer sections 8' are grouped into two different groups (in figure 4 two groups of four adjacent sections 8' each), wherein all signal electrode layer sections 8' of one group at corresponding ones of the section ends 11 or 12 are connected to respective signal electrode lines 5. Thus, in figure 4 the 'upper' group of sections 8' are connected to respective signal electrode lines 5 at their (lefthanded) section ends 11, whereas the 'lower' group of sections 8' are connected to respective signal electrode lines 5 at their (righthanded) section ends 12. Thus, the width of the two bundles of signal electrode lines 5 extending longitudinally along corresponding side edges of the roof assembly 1 can be minimized. It is noted that the indications 'upper' and 'lower' merely relate to the orientation in the figure and not to a real orientation.

In figure 4 the total number of sections 8' in the two different groups is equal (in this embodiment there is an even number of sections 8'). If the total number is uneven, it is preferred that one group contains only a single section 8' more than the other group. Further this embodiment has a single common electrode layer which requires a single common electrode line 4 (here connected to section end 11, but it also can be connected at any other convenient edge location of the roof assembly 1, for example a rearward edge, as illustrated at 4").

Figure 5 shows an alternative arrangement of the sections, with two subgroups of adjacent sections 8' each having respective signal electrode lines 5 connected to the righthanded section ends 12, and a group of adjacent sections 8' positioned between the two subgroups and having respective signal electrode lines 5 connected to the lefthanded section ends 11. The common electrode line has not been illustrated, but again may be connected at any desired or appropriate edge location of the roof assembly 1.

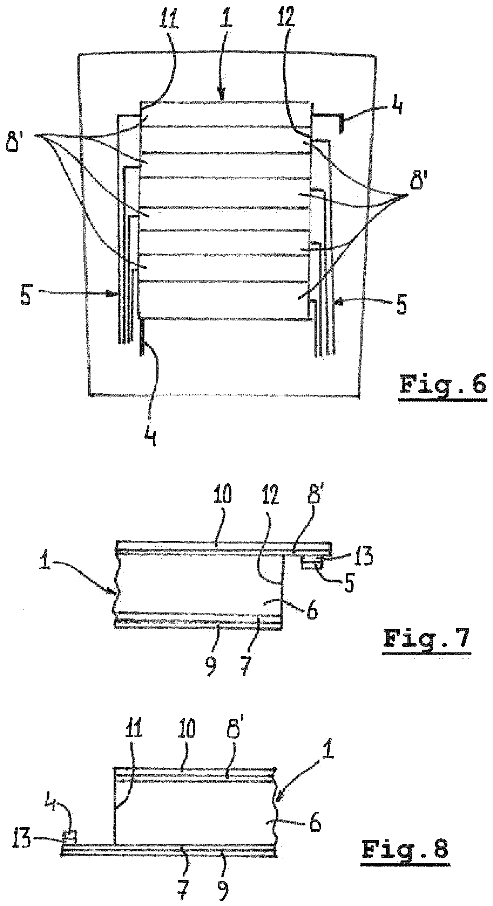

Yet another embodiment is illustrated in figure 6 in which the signal electrode layer sections 8' are arranged such that, as viewed in the longitudinal direction, signal electrode layer sections 8' belonging to one group (having the signal electrode lines 5 connected to section ends 11) and signal electrode layer sections 8' belonging to the other group (having the signal electrode lines 5 connected to opposite section ends 12) alternate. Here two common electrode lines 4 have been illustrated, which will connect to two separate common electrode layers (which together will define the common electrode layer 7). Generally, the or each common electrode line 4 will be connected to the common electrode layer (or layers) 7 at an edge location of the roof assembly 1 where no signal electrode line 5 connects to a section end 11 or 12. For example, it may connect to a common electrode layer at a free section end (that means a section end where there is no connection to a signal line 5) or to a forward or rearward edge of the common electrode layer.

Figure 7 schematically illustrates part of a transverse cross-section showing the constitutive layers of a roof assembly. One can see that at a section end (here section end 12) where a signal electrode line 5 is connected to a respective signal electrode layer 8, the central electrically dimmable layer 6, the common electrode layer 7 and the support layer 9 on the common electrode layer are inwardly recessed. As a result, part of the signal electrode layer will be exposed and the signal electrode line 5 may be connected therewith by means of, for example, solder or a conductive paste 13. This also provides space for accommodating the signal electrode lines (and/or common electrode line(s)).

In a similar manner (as illustrated in figure 8) the central electrically dimmable layer 6, the signal electrode layer 8 and the support layer 10 on the signal electrode layer 8 may be inwardly recessed at the edge location (here for example section end 11) where a common electrode line 4 is connected to the corresponding common electrode layer 7 (using, for example, solder or a conductive paste 13) .

The arrangements according to figures 7 and 8 may be applied and combined in any convenient manner. For example, they both may define opposite ends of a section (but also a provision at other edge locations of the roof assembly is conceivable). But also, one of these arrangements may be provided at both ends of a section or at a forward and rearward edge of the roof assembly. Such an arrangement may extend over the entire length, but also over only a limited length in the longitudinal direction of the roof assembly. Thus, in a specific embodiment and referring to figure 4, it is conceivable that for the 'upper' group of sections 8' the central electrically dimmable layer 6, the common electrode layer 7 and the support layer 9 on the common electrode layer are inwardly recessed at section ends 11, whereas for the 'lower' group of sections 8' the central electrically dimmable layer 6, the signal electrode layer 8 and the support layer 10 on the common electrode layer are inwardly recessed at those section ends 11 (and wherein, for example, the central electrically dimmable layer 6, the common electrode layer 7 and the support layer 9 on the common electrode layer are inwardly recessed at the section ends 12 of both groups, thus over the total length of the respective side edge of the roof assembly).

The invention is not limited to the described embodiments which may be varied widely within the scope of the invention as defined by the appending claims.

## Claims

1. Dimmable transparent roof assembly intended for use in the roof of a vehicle, comprising a central electrically dimmable layer, a common electrode layer on one surface of the dimmable layer which is connected to a common electrode line, a signal electrode layer on the opposite surface of the dimmable layer and two support layers on the surfaces of the common electrode layer and of the signal electrode layer, respectively, facing away from the dimmable layer, wherein the signal electrode layer, as seen in a longitudinal direction of the roof assembly, is divided into signal electrode layer sections each extending in a transverse direction between opposite section ends, **characterized in that** the signal electrode layer sections are grouped into two different groups and wherein all signal electrode layer sections of one group at corresponding ones of the section ends are connected to respective signal electrode lines, whereas all signal electrode layer sections of the other group at corresponding opposite ones of the section ends are connected to respective signal electrode lines and wherein the signal electrode lines extend longitudinally along side edges of the roof assembly which correspond with the respective section ends.

2. Dimmable transparent roof assembly according to claim 1, wherein the difference between the number of signal electrode layer sections in the two different groups is at most 1.

3. Dimmable transparent roof assembly according to any of the previous claims, wherein the signal electrode layer sections belonging to the same group are arranged adjacent each other and wherein the two different groups are positioned adjacent to each other as viewed in the longitudinal direction.

4. Dimmable transparent roof assembly according to claim 1 or 2, wherein the signal electrode layer sections belonging to one group are divided into two different subgroups each comprising signal electrode layer sections arranged adjacent each other, whereas the signal electrode layer sections belonging to the other group are arranged adjacent each other into a single group which, as viewed in the longitudinal direction, is positioned between the two subgroups.

5. Dimmable transparent roof assembly according to claim 1 or 2, wherein the signal electrode layer sections are arranged such that, as viewed in the longitudinal direction, signal electrode layer sections belonging to one group and signal electrode layer sections belonging to the other group alternate.

6. Dimmable transparent roof assembly according to any of the previous claims, wherein at the section ends where signal electrode lines are connected to the signal electrode layer sections, the central electrically dimmable layer, the common electrode layer and the support layer on the common electrode layer are inwardly recessed.

7. Dimmable transparent roof assembly according to any of the previous claims, wherein the common electrode line is connected to the common electrode layer at an edge location of the roof assembly where no signal electrode line connects to a section end.

8. Dimmable transparent roof assembly according to claim 7, wherein there is only one common electrode layer for all signal electrode layer sections.

9. Dimmable transparent roof assembly according to claim 8, wherein the common electrode line is connected to the common electrode layer at a forward or rearward edge of the roof assembly.

10. Dimmable transparent roof assembly according to claim 7, wherein there is a separate common electrode layer for each group with its respective common electrode line.

11. Dimmable transparent roof assembly according to claim 10, wherein a common electrode line of a group is connected to a corresponding common electrode layer at a side edge of the roof assembly opposite the section ends to which the signal electrode lines of said group are connected and wherein said common electrode line extends longitudinally along said side edge.

12. Dimmable transparent roof assembly according to any of the claims 7-11, wherein at the edge location where a common electrode line is connected to the corresponding common electrode layer the central electrically dimmable layer, the signal electrode layer and the support layer on the signal electrode layer are inwardly recessed.

13. Dimmable transparent roof assembly according to any of the previous claims, wherein the common electrode line(s) and/or the signal electrode lines are defined by flexible printed circuits.
